# EUROPEAN PATENT SPECIFICATION

(11) **EP 2 026 989 B1**
(45) Date of publication and mention of the grant of the patent: **27.01.2016**
(21) Application number: 07729167.2
(22) Date of filing: 15.05.2007
(51) Int. Cl.: B60K 15/04, B60K 15/05

(54) **PLUG SYSTEM FOR A FUEL TANK FILLER PIPE**
VERSCHLUSSKAPPENSYSTEM FÜR EINEN KRAFTSTOFFTANKEINFÜLLSTUTZEN
SYSTÈME DE BOUCHON POUR TUYAU DE REMPLISSAGE DE RÉSERVOIR DE CARBURANT

(30) Priority: 22.05.2006 FR 0604579
(43) Date of publication of application: 25.02.2009
(73) Proprietor: Inergy Automotive Systems Research (Société Anonyme), 1120 Bruxelles (BE)
(72) Inventor: BAUDOUX, Patrice, F-02520 Flavy Le Martel (FR); ZANINI, Ambroise, MC-98014 Monaco Cedex (MC)
(74) Representative: de la Bigne, Guillaume Michel Marie
(86) International application number: PCT/EP2007/054719
(87) International publication number: WO 2007/135030

(56) References cited:
- EP-A1- 1 329 353
- WO-A-03/010022
- WO-A-2006/082235
- WO-A-2006/111817
- DE-A1- 19 832 910
- FR-A1- 2 861 655

## Description

The present invention relates to a built-in plug system for a fuel tank filler pipe.

Filler pipes present on fuel tanks, particularly tanks on board motor vehicles, are plugged during normal use of the tank, when the tank is not being filled. Plugging is generally achieved by means of a cap inserted into the upper part of the pipe and twisted in order to seal the pipe against liquids and gases. Various types of cap may be encountered, made of metal and/or made of plastic, sealing being achieved by compressing a seal, this being achieved by screwing the cap in or by turning a key inserted into the middle of the part outside the pipe.

The operations of removing the cap before filling the tank and of replacing this cap and closing off the pipe after filling are usually done manually by the user or by the service station attendant dispensing the fuel. When the tank filling operation is over, people sometimes forget to replace the cap and this can then give rise to the loss of this cap and to the pipe being left open to the atmosphere for some length of time. During this period, losses of liquid fuel may occur and vapours escape into the ambient atmosphere.

With a view to avoiding cap losses and the ensuing atmospheric pollution, plug systems built into the filler pipe have been proposed as a replacement for the conventional cap. Improved versions thereof generally comprise locking means that prevent the said systems from opening unexpectedly, for example when the bowl (the depression in the bodywork in which the filler pipe is located and which is closed off by the fuel filler flap) is being cleaned using a pressure washer.

The fuel flap is usually formed in the bodywork. It is designed to prevent access to the cap or to the plug system when the flap is closed and to give access to the cap or to the plug system when it is open. When closed, the flap is usually flush with the bodywork so as to present little or no height difference with respect to the bodywork.

To save the user having to operate the locking means manually, it is prior art to activate them by a movement of the fuel flap. The movement of the flap is generally transmitted to the locking means by a mechanical connection system so that as the flap moves it transmits a force to the mechanical connection system which in turn acts on the locking means.

Application WO 03/010022 in the name of the Applicant Company describes a plug device equipped with locking means that can be disengaged by a thrust force parallel to the axis of the top of the pipe and re-engaged automatically when the fuel flap is closed by a mechanical connection between the flap and the locking means. Automatic locking occurs throughout the closing movement of the flap. This means that the force produced by the locking means for completely locking and sealing the plug is transmitted via the mechanical connection to the flap. This can result in a misalignment of the flap by the time it reaches the end of the closing movement.

The present invention solves the problem of the misalignment of the fuel flap when its movement is connected to the direct activation of the locking means.

To this end the present invention relates to a plug system: according to claim 1.

DE 198 32 910 A1 discloses a system in which a fuel flap and a filler pipe cap are mechanically linked to an actuator to provide automatic and coordinated opening and closing of both. That system does not provide the advantages of the present invention.

The term "fuel tank" is intended to denote any type of tank capable of storing a liquid and/or gaseous fuel under varying temperature and pressure conditions. Those more particularly concerned are tanks of the kind found in motor vehicles. The expression "motor vehicle" is intended to include motor cars, motorcycles and trucks.

The filler pipe is a pipe which communicates with the inside of the tank and allows fuel to be introduced into it.

The tank and the pipe may be made of metal or of plastic.

The plug system according to the invention is very suitable for a tank and filler pipe assembly in which at least one of the two components of the assembly is made of plastic. It is particularly suitable for an assembly in which the filler pipe is made of plastic. As a preference, this plug system itself comprises at least one part made of plastic. As a strong preference, it is mainly made of plastic.

The term "plastic" is intended to denote any material comprising at least one synthetic resin polymer.

All types of plastic may be suitable. Particularly suitable plastics come from the thermoplastics category.

The term "thermoplastic" denotes any thermoplastic polymer, including thermoplastic elastomers, as well as blends thereof. The term "polymer" denotes both homopolymers and copolymers (especially binary or ternary copolymers). Examples of such copolymers are, nonlimitingly, random copolymers, linear block copolymers, other block copolymers and graft copolymers.

Any type of thermoplastic polymer or copolymer whose melting point is below the decomposition temperature is suitable. Synthetic thermoplastics that have a melting range spread over at least 10 degrees Celsius are particularly suitable. Examples of such materials include those that exhibit polydispersion in their molecular weight.

In particular, polyolefins, polyvinyl halides, thermoplastic polyesters, polyketones, polyamides and copolymers thereof may be used. A blend of polymers or copolymers may also be used, as may a blend of polymer materials with inorganic, organic and/or natural fillers such as, for example, but nonlimitingly, carbon, salts and other inorganic derivatives, natural fibres or polymeric fibres. In particular, fibre-filled (for example glass-fibre-filled) polyamides are particularly suitable. Advantageously, at least some of these polymeric materials contain a conductive filler (carbon black, for example) in order to avoid problems associated with static electricity. It is also possible to use multilayer structures consisting of stacked layers bonded together comprising at least one of the polymers or copolymers described above.

The plug system according to the invention is intended to act as a cap which seals the upper part of the filler pipe when the tank is not being filled, with a view to avoiding any release and loss of liquid fuel and vapour into the atmosphere when the tanks contains fuel.

The plug system according to the invention is built into the top of the filler pipe, that is to say is incorporated into a set of parts which are mounted on the upper end of the filler pipe and the purpose of which is to guide a fuel dispensing nozzle and make filling easier. To do this, the top of the pipe comprises an opening that communicates with (is aligned with) the filler pipe and that the plug of the system according to the invention closes off in a sealed manner when in the closed position.

The plug system according to the invention allows the pipe to be opened automatically via the action of a filler nozzle when it is in the unlocked position. The expression "opened automatically" is to be understood as meaning opened by the action of the filler nozzle alone, to the exclusion of any other mechanical influence. The filler nozzle is the nozzle fitted to fuel pump hoses in service stations.

The plug system comprises a plug, that is to say a device that prevents the passage of gases and liquids through the aforementioned opening in the top of the pipe. This plug may adopt various forms, but according to the invention, it must be essentially circular in section. It is therefore basically cylindrical (i.e. is a cylinder in shape) and may be either long or flat (a disc). One particularly suitable form is that of a moving disc which plugs the passage when in the closed position. As a preference, this disc pivots about an axis. It is advantageously made of plastic but is preferably equipped with a metal cover, particularly for aesthetic reasons and for resistance to abrasion (wear following numerous insertions of filler nozzles).

This disc may optionally be coupled to a rotary stopper comprising a cylindrical opening (as in patent FR 2 861 655 in the name of the Applicant Company).

This disc may also comprise a device for regulating the pressure in the filler pipe and, in particular, an "SPD" (for "safety under pressure and depression") valve as described in application FR 2 753 138.

The plug is therefore preferably retractable under the action of a force directed against it along an axis essentially parallel to the axis of the top of the pipe. Various means may be present to render the plug retractable. One means that has yielded good results is a rod mounted on the top of the pipe and connected to the periphery of the plug, which can act as a rotation hinge pin allowing the plug to pivot. In this variant, the plug preferably has means for connecting the rod to its perimeter.

The plug is kept in a closed position by a return spring. One type of spring that is particularly suitable is a torsion spring positioned around the rod with one end secured to the plug.

The system according to the invention includes a locking device.

In one particular variant, the locking device may consist of a pivoting door as described in application WO2005/ 105505 in the name of the Applicant Company.

The locking device preferably comprises a rotatable component (preferably in the general shape of a ring, which will be referred to in this text as the "ring" for convenience) attached to the plug in a bayonet system whose interacting parts (three-dimensionally shaped parts) are preferably located partly on an inside surface (or still more preferably on the perimeter of an inside opening) of the ring and on the outer perimeter of the plug. These three-dimensionally shaped parts are preferably of a geometry such as to permit not only a rotary movement of the ring between the locked and unlocked positions of the bayonet but also a "vertical" movement (parallel to the plug axis) of this ring in order respectively to compress/decompress a seal between the plug and the top of the pipe, or more exactly on the perimeter of the opening in the pipe which the plug is designed to close. This seal may be of any type. An O-ring seal gives good results. The material of this seal will preferably be chosen to tolerate fuel vapour. Fluorinated elastomers are suitable for this purpose.

For example, one component (the ring for example) may comprise recesses suitable in number, size and shape to permit the movement and passage of lugs on the other component (the plug). In particular, the recesses in the ring (or in the plug) advantageously include a ramp and notches corresponding in number, size and shape to the number of lugs on the plug (or on the ring). As a matter of particular preference, the ramp and lugs are bevelled in complementary manners, that is, their shaping is discontinuous to facilitate their movement, which is both vertical and rotary. The rotary ring may be made of plastic (as defined above) or metal.

In particular, the recesses in the ring (or in the plug) advantageously comprise a helical ramp and notches in a number corresponding to the number of lugs positioned on the plug (or on the ring). These lugs/notches are generally positioned uniformly around the perimeters of the ring and of the plug and these are generally at least two, preferably three, or even four, or even six of them. Systems with three lugs/notches yield good results.

According to the invention, the plug system comprises a fuel flap able to occupy a position allowing access to the pipe and a position preventing access to the pipe. The flap is usually attached to a bowl which in turn is usually fixed to the chassis of a vehicle.

The bowl may in particular consist of at least two components assembled together, one being a lower housing and the other an upper housing.

In one particular variant of the system according to the invention, the flap comprises a door able to pivot about an axis essentially perpendicular to the axis of the pipe.

The door preferably comprises a hollow part of essentially cylindrical shape. The door is preferably attached to the bowl by means of a rod functioning as an hinge pin for the door to pivot on. The rod is inside the hollow part and its two ends are fixed to the bowl.

The movement of the flap may be manual or electrical/mechanical (via a motor).

The plug system according to the invention also includes a mechanical connection system capable of transmitting part of the movement of the flap to the locking device in such a way as to lock or unlock the plug. This connection system generally comprises any form of component capable of transmitting a movement, such as for example a train of pinions, a link, a cam, a track and/or a rack system. The various components are able to interact by the transmission of part of a movement from one component to another, adjacent component.

The transmission of at least part of the movement from one component to another, adjacent component can preferably be accomplished by means of complementary gears.

The mechanical connection system preferably comprises at least a link and a cam able to cooperate in a mechanical connection that can be deactivated for at least part of the movement of the flap. Deactivation is possible by means of appropriate geometry of the link, of the cam and/or optionally of some other component of the mechanical connection system.

The cam may preferably incorporate a profile, capable of interacting with the link, which is such that, for at least part of the movement of the flap, movement of the link is not transmitted to the cam.

More preferably, the mechanical connection system comprises at least two components able to interact by means of complementary gears.

For preference, if the plug is attached to a ring in a bayonet system, ring rotation is connected to the flap opening/closing. In this form the ring of the bayonet usually moves in one direction during opening, and in the reverse direction during closing of the flap, in which case the ring need simply be provided with a driving dog which can be temporarily connected to the fuel flap by a mechanical connection system as described above, comprising for example a slide and a rack system. This dog is then subjected to a back-and-forth movement between a position in which the plug is locked and a position in which the plug is unlocked.

Movement of the flap produces an action on the mechanical connection system by force transmission. The transmitted force acts on the locking device to lock/unlock the plug. As already described, if the plug is attached to a ring in a bayonet system, movement of the ring will compress/decompress the seal between the plug and the top of the pipe. This latter operation can create a reaction next to the ring which is transmitted by the connection system to the flap/bowl attachment system.

For example, as the flap moves from an open position to a closed position, the mechanical connection system acts on the locking device to lock the plug. The locking device creates a force which is transmitted to the flap/bowl attachment system via the mechanical connection system.

Similarly, as it moves the flap from a closed position to an open position, the mechanical connection system transmits a force, created by the unlocking of the plug, to the flap attachment system.

In both cases - that is, movement of the flap from an open position to a closed position or vice versa - the force transmitted to the flap attachment system can cause the flap to become misaligned in its open or closed positions.

With the invention, the mechanical connection system is deactivated for part of the movement of the flap, that is, only part of the movement of the flap can be transmitted to the locking device in such a way as to lock or unlock the plug. As a result, the force created by the locking device is transmitted to the attachment system for only part of the movement of the flap said movement not being transmitted when the flap reaches its closed position. In particular, it is also not transmitted when the flap reaches its open position. The play introduced into the flap/bowl attachment system by the transmitted force is thus closed up.

In one particular variant, the flap pivots in the course of a movement comprising
- a first part where the mechanical connection system is deactivated,
- a second part where the locking device is moved from a locked position to an unlocked position or vice versa, and
- a third part where the mechanical connection system is also deactivated.

The first part of the pivoting preferably corresponds to an angular variation of between 0° and 15°, preferably between 0° and 10°, the second part corresponds to an angular variation of between 10° and 65°, preferably between 15° and 60°, and the third part corresponds to an angular variation of between 60° and 90°, preferably between 65° and 90°.

In one particularly advantageous variant, and as described in WO2005025913 in the name of the Applicant Company, the plug system according to the present invention also comprises a protective shield for the plug which is movable in essentially one plane, preferably essentially perpendicular to the axis of the pipe.

It is distinctly preferable for the said shield to be able to move by pivoting about an axis parallel to the axis of the pipe, in a given plane. Notice that this variant also gives good results with other plug systems than those of the invention. Such a movement (pivoting about an axis rather than translation) enables a smaller protective shield to be used.

The present invention is illustrated, without any limitation being implied, in figures 1 to 13.

Figures 1 and 2 show a first variant of the system according to the invention in a situation in which the fuel flap is closed and the plug is locked; figures 3 and 4 show the same variant in a situation in which the fuel flap is open and the plug is unlocked. Figures 1 and 3 are top views, while figures 2 and 4 are bottom views.

Figures 5 to 13 show a second variant of the system according to the invention.

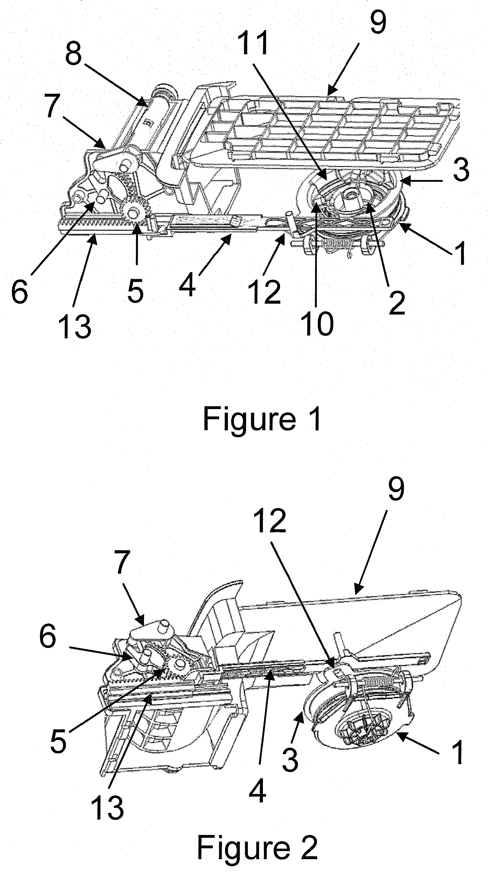

The plug system shown in figure 1 comprises a plug (1) having a locking device comprising a body (2) with lugs (10) able to interact with a ring (3) in a bayonet system. The plug system also includes a mechanical connection system. This comprises a slide (4) connected to a driving dog (12) with which the ring (3) is provided. The connection system comprises a train of pinions (5) and a rack (13) capable of interacting with the slide (4) on one hand and with the train of pinions (5) on the other. It also includes a cam (6) and a link (7). The train of pinions (5) is able to interact with the cam (6) in such a way that rotary movement of the cam (6) turns the train of pinions (5). The plug system also includes a flap (9) capable of pivoting about a hinge pin (8) connected to the link (7). In this figure, the link (7) is not in contact with the cam (6).

In figure 1, the plug (1) is in the locked position so that the lugs (10) are pressing on the ring (3) to prevent the plug (1) moving.

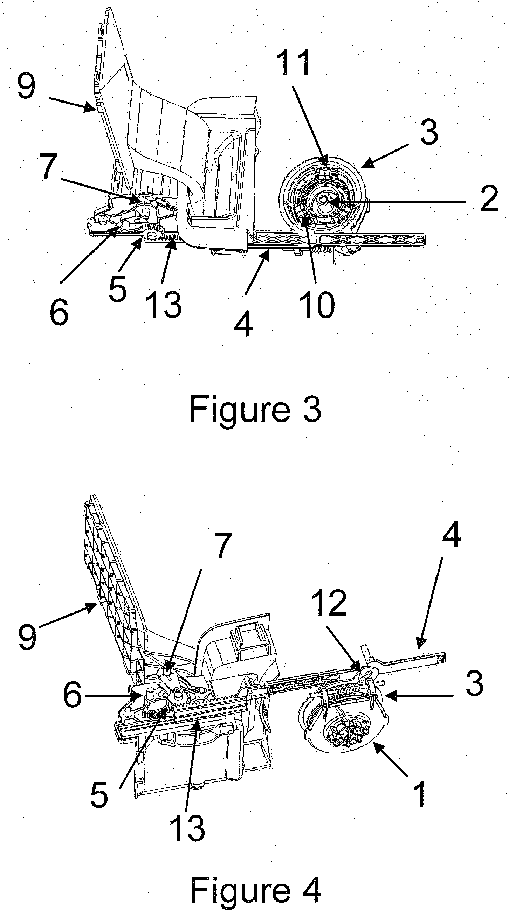

In figure 3 the flap (9) is in the open position while the ring (3) is unlocked, i.e. the lugs (3) are no longer pressing against the ring (3) but are in notches (11) formed in the ring (3). The ring (3) has been caused to rotate by the slide (4) following opening of the flap (9) and, by mechanical connection, driving of the hinge pin (8), the link (7), the cam (6), the train of pinions (5) and the slide (4), the slide (4) being connected to the ring (3).

In figures 1 to 4 it will be observed that the cam (6) has a special profile: the indented part designed to engage with the link (7) is such that, when the link (7) is turned by a pivoting movement of the flap (9), the link (7) does not engage with the cam (6) during an initial part of the movement of the link (7), which means that the ring (3) does not turn because the mechanical connection is deactivated.

In the course of a second part of the movement of the flap (9), the link (7) engages with the cam (6) in such a way as to bring about a rotational movement of the cam (6). This part corresponds to a useful part of the pivoting movement of the flap (9), specifically that which corresponds to unlocking the ring (3). When the ring (3) is fully unlocked, the cam (6) has undergone a rotation such that any further movement of the link (7) has no effect on the cam (6).

In the course of a third part of the movement of the flap (9), rotation of the link (7) has no effect on the movement of the cam (6), which means that the mechanical connection between the movement of the flap and the locking device is deactivated.

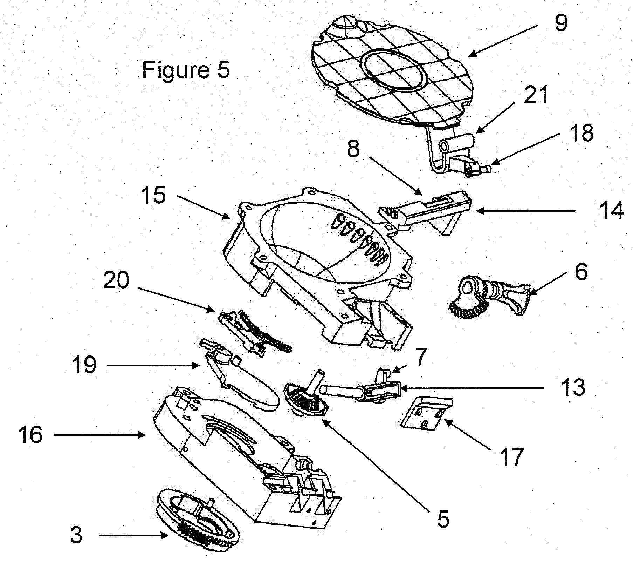

Figure 5 is an exploded view of a second variant of a plug system according to the invention. The following components are shown:
- ring (3)
- train of pinions (5)
- cam (6)
- link (7)/track (13) assembly
- hinge pin (8)
- flap (9)
- hinge mounting (14)
- upper housing (15)
- lower housing (16)
- limit stop (17)
- pin (18)
- shield (19)
- trigger (20)
- hollow part (21).

The flap (9) includes the hollow part (21) which is basically cylindrical in shape and is connected to the hinge mounting (14) by means of the hinge pin (8) which engages with both the mounting (14) and the part (21). The flap (9) can pivot about the hinge pin (8). The flap (9) is also provided with a pin-like projection (18) for engaging with the track (13). When the flap (9) is in the closed position, the link (7)/track (13) assembly occupies a position defined by the track (13) contacting the limit stop (17). The link (7)/track (13) assembly includes the link (7) designed to interact with the cam (6). The cam (6) is in mechanical connection with the train of pinions (5) in such a way that when the cam (6) rotates, it turns the train of pinions (5). The latter is directly engaged with a toothed part of the bayonet (3) so that the rotation of the train of pinions (5) in turn rotates the bayonet (3), that is to say, locks or unlocks a plug (not shown in the figure). The plug system in this variant comprises a bowl consisting of an upper housing (15) and a lower housing (16), and is mounted on the top of the filler pipe.

The plug system also includes a pivoting protective shield (19) and a trigger (20).

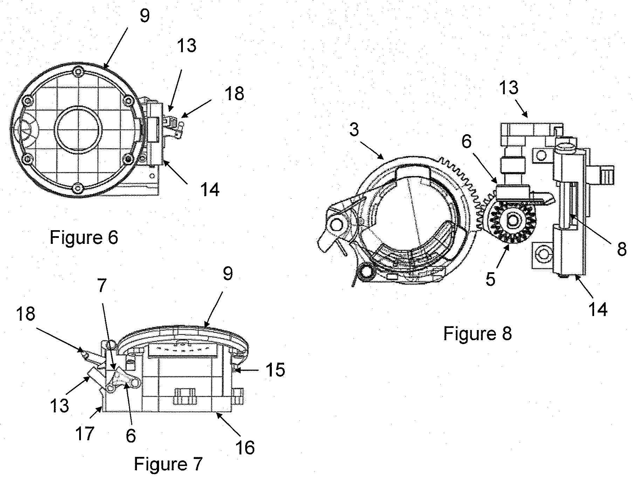

Figures 6 to 8 illustrate the case in which the flap (9) is in a closed position and the plug is locked.

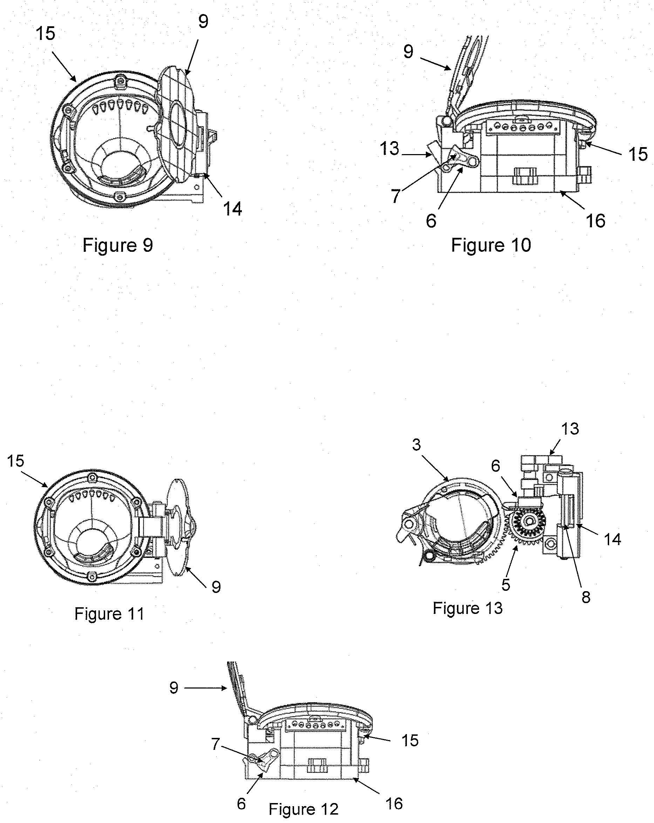

Figures 9 and 10 show the case in which the flap (9) is in an intermediate position and the plug is locked.

Figures 11 to 13 show the case in which the flap (9) is in the open position and the plug is unlocked.

Figure 6 is a top view of the plug system: the flap (9) is in the closed position and the pin (18) is not in contact with the track (13). Figure 7 shows the same situation but in a side view.

Figure 8 shows the mechanical connection system, particularly the train of pinions (5) and the ring (3).

In figure 10 it can be seen that, with the flap (9) in an intermediate position, the link (7)/track (13) assembly has undergone a rotation without acting on the cam (6), so the plug is held in the locked position.

In figure 12 the link (7) has acted on the cam (6) in such a way that the latter has undergone a rotation, thereby turning the train of pinions (5) and the ring (3). This can also be seen in figure 13 where the train of pinions (5) has turned the ring (3) in such a way that the lugs (10) are positioned in the notches of the ring (3): the plug is thus unlocked.

## Claims

1. Plug system to be built into the top of a fuel tank filler pipe, comprising
• a plug (1) with a locking device, the plug being arranged to be kept in a closed position by a return spring and to be opened automatically via the action of a filler nozzle when it is in unlocked position,
• a fuel flap (9) able to occupy a position allowing access to the pipe and a position preventing access to the pipe, and
• a mechanical connection system able to transmit a movement from the flap (9) to the locking device in such a way as to lock or unlock the plug (1),
**characterized in that** the mechanical connection system comprises components configured to interact by part of a movement of one component being transmitted to another, adjacent component in such a way that only part of the movement of the flap (9) can be transmitted to the locking device in order to lock or unlock the plug (1), said movement not being transmitted when the flap reaches its closed position.

2. System according to Claim 1, **characterized in that** the plug (1) is retractable under the action of a force directed against it along an axis essentially parallel to the axis of the pipe.

3. System according to either of Claims 1 and 2, **characterized in that** the plug (1) comprises a device for regulating the pressure in the filler pipe.

4. System according to any one of Claims 1 to 3, **characterized in that** the locking device comprises a ring (3) attached to the plug (1) in a bayonet system.

5. System according to any one of Claims 1 to 4, **characterized in that** the mechanical connection system comprises at least a link (7) and a cam (6) able to cooperate in a mechanical connection that can be deactivated for at least part of the movement of the flap (9).

6. System according to any one of Claims 1 to 5, **characterized in that** the mechanical connection system comprises at least two components able to interact by means of complementary gears.

7. System according to any one of Claims 1 to 6, **characterized in that** the fuel flap (9) comprises a door able to pivot about an axis (8) essentially perpendicular to the axis of the pipe.

8. System according to Claim 7, **characterized in that** the door is able to pivot in the course of a movement comprising
• a first part where the mechanical connection system is deactivated,
• a second part where the locking device is moved from a locked position to an unlocked position or vice versa, and
• a third part where the mechanical connection system is also deactivated.

9. System according to Claim 8, **characterized in that**
• the first part of the pivoting corresponds to an angular variation of between 0° and 15°,
• the second part of the pivoting corresponds to an angular variation of between 10° and 65°, and
• the third part of the pivoting corresponds to an angular variation of between 60° and 90°.

10. System according to any one of Claims 1 to 9, **characterized in that** it comprises a protective shield (19) for the plug (1).

## Patentansprüche

1. Verschlussklappensystem zum Einbau in die Oberseite eines Kraftstofftankeinfüllstutzens, wobei vorgesehen sind
- eine Verschlussklappe (1) mit einer Verriegelungsvorrichtung, wobei die Verschlussklappe so angeordnet ist, dass sie in einer geschlossenen Position durch eine Rückstellfeder gehalten wird, und automatisch über die Einwirkung eines Einfüllstutzens geöffnet wird, wenn sie sich in der entriegelte Position befindet,
- eine Kraftstoffklappe (9), die eine Position einnehmen kann, welche Zugang zu dem Stutzen ermöglicht, sowie eine Position, welche Zugang zu dem Stutzen verhindert, und
- ein mechanisches Verbindungssystem, welches eine Bewegung von der Klappe (9) an die Verriegelungsvorrichtung auf solche Weise übertragen kann, dass die Verschlussklappe (1) verriegelt oder entriegelt wird,
**dadurch gekennzeichnet, dass** das mechanische Verbindungssystem Bauteile aufweist, die so ausgebildet sind, dass sie dadurch wechselwirken, dass ein Teil einer Bewegung eines Bauteils auf ein anderes, benachbartes Bauteil auf solche Weise übertragen wird, dass nur ein Teil der Bewegung der Verschlussklappe (9) auf die Verriegelungsvorrichtung übertragen werden kann, um die Verschlussklappe (1) zu verriegeln oder zu entriegeln, wobei die Bewegung nicht übertragen wird, wenn die Klappe ihre geschlossene Position erreicht.

2. System nach Anspruch 1, **dadurch gekennzeichnet, dass** die Verschlussklappe (1) unter der Einwirkung einer Kraft, welche gegen sie entlang einer Achse im Wesentlichen parallel zur Achse des Stutzens gerichtet ist, einziehbar ist.

3. System nach Anspruch 1 oder 2, **dadurch gekennzeichnet, dass** die Verschlussklappe (1) eine Vorrichtung zum Regulieren des Drucks in dem Einfüllstutzen aufweist.

4. System nach einem der Ansprüche 1 bis 3, **dadurch gekennzeichnet, dass** die Verriegelungsvorrichtung einen Ring (3) aufweist, der an der Verschlussklappe (1) in einem Bajonettsystem angebracht ist.

5. System nach einem der Ansprüche 1 bis 4, **dadurch gekennzeichnet, dass** das mechanische Verbindungssystem zumindest ein Verbindungsglied (7) und einen Nocken (6) aufweist, die in einer mechanischen Verbindung zusammenarbeiten können, die für zumindest einen Teil der Bewegung der Klappe (9) deaktiviert werden kann.

6. System nach einem der Ansprüche 1 bis 5, **dadurch gekennzeichnet, dass** das mechanische Verbindungssystem zumindest zwei Bauteile aufweist, die mittels komplementärer Zahnräder wechselwirken können.

7. System nach einem der Ansprüche 1 bis 6, **dadurch gekennzeichnet, dass** die Kraftstoffklappe (9) eine Tür aufweist, die sich um eine Achse (8) im Wesentlichen senkrecht zur Achse des Stutzens verschwenken kann.

8. System nach Anspruch 7, **dadurch gekennzeichnet, dass** sich die Tür im Verlauf einer Bewegung verschwenken kann, welche umfasst
- einen ersten Teil, bei welchem das mechanische Verbindungssystem deaktiviert ist,
- einen zweiten Teil, bei welchem die Verriegelungsvorrichtung von einer verriegelten Position in eine entriegelte Position oder umgekehrt bewegt wird, und
- einen dritten Teil, bei welchem auch das mechanische Verbindungssystem deaktiviert ist.

9. System nach Anspruch 8, **dadurch gekennzeichnet, dass**
- der erste Teil der Schwenkbewegung einer Winkeländerung zwischen 0° und 15° entspricht,
- der zweite Teil der Schwenkbewegung einer Winkeländerung zwischen 10° und 65° entspricht, und
- der dritte Teil der Schwenkbewegung einer Winkeländerung zwischen 60° und 90° entspricht.

10. System nach einem der Ansprüche 1 bis 9, **dadurch gekennzeichnet, dass** es eine Schutzabschirmung (19) für die Verschlussklappe (1) aufweist.

## Revendications

1. Système d'obturation à intégrer dans une tête de tubulure de remplissage de réservoir à carburant, comprenant
- un obturateur (1) muni d'un dispositif de verrouillage, l'obturateur étant conçu pour être maintenu en position fermée par un ressort de rappel et pour être ouvert automatiquement via l'action d'un pistolet de remplissage lorsqu'il est en position déverrouillée,
- une trappe à carburant (9) susceptible d'occuper une position permettant l'accès à la tubulure et une position empêchant l'accès à la tubulure, et
- un système de liaison mécanique susceptible de transmettre un mouvement de la trappe (9) au dispositif de verrouillage de manière à verrouiller ou déverrouiller l'obturateur (1),
**caractérisé en ce que** le système de liaison mécanique comprend des composants configurés pour coopérer entre eux par transmission d'une partie d'un mouvement d'un composant à un autre composant adjacent de sorte que seulement une partie du mouvement de la trappe (9) peut être transmise au dispositif de verrouillage de manière à verrouiller ou déverrouiller l'obturateur (1), ledit mouvement n'étant pas transmis quand la trappe atteint sa position de fermeture.

2. Système selon la revendication 1, **caractérisé en ce que** l'obturateur (1) est escamotable sous l'action d'une poussée dirigée contre lui selon un axe substantiellement parallèle à l'axe de la tubulure.

3. Système selon l'une quelconque des revendications 1 ou 2, **caractérisé en ce que** l'obturateur (1) comprend un dispositif de tarage de la pression dans la tubulure de remplissage.

4. Système selon l'une quelconque des revendications 1 à 3, **caractérisé en ce que** le dispositif de verrouillage comprend un anneau (3) solidaire de l'obturateur (1) selon un système à baïonnette.

5. Système selon l'une quelconque des revendications 1 à 4, **caractérisé en ce que** le système de liaison mécanique comprend au moins une bielle (7) et une came (6) susceptibles de coopérer dans une liaison mécanique qui peut être désactivée sur au moins une partie du mouvement de la trappe (9).

6. Système selon l'une quelconque des revendications 1 à 5, **caractérisé en ce que** le système de liaison mécanique comprend au moins deux composants susceptibles de coopérer entre eux au moyen d'engrenages complémentaires.

7. Système selon l'une quelconque des revendications 1 à 6, **caractérisé en ce que** la trappe à carburant (9) comprend un volet susceptible de pivoter autour d'un axe (8) substantiellement perpendiculaire à l'axe de la tubulure.

8. Système selon la revendication 7, **caractérisé en ce que** le volet est susceptible de pivoter au cours d'un mouvement comprenant
- une première partie où le système de liaison mécanique est désactivé,
- une deuxième partie où le dispositif de verrouillage est déplacé d'une position de verrouillage vers une position de déverrouillage ou inversement,
- une troisième partie où le système de liaison mécanique est également désactivé.

9. Système selon la revendication 8, **caractérisé en ce que**
- la première partie du pivotement correspond à une variation angulaire comprise entre 0° et 15°,
- la deuxième partie du pivotement correspond à une variation angulaire comprise entre 10° et 65°, et
- la troisième partie du pivotement correspond à une variation angulaire comprise entre 60° et 90°.

10. Système selon l'une quelconque des revendications 1 à 9, **caractérisé en ce qu'**il comprend un bouclier de protection (19) pour l'obturateur (1).
